# FASCICULE DE BREVET EUROPEEN

(11) **EP 4 448 383 B1**
(45) Date de publication et mention de la délivrance du brevet: **10.09.2025**
(21) Numéro de dépôt: 22850585.5
(22) Date de dépôt: 16.12.2022
(51) Int. Cl.: B64C 13/40, B64C 13/50, B64C 27/64, B64C 27/68, F15B 20/00

(54) **SYSTÈME DE TRANSMISSION DE COMMANDE À UN SERVO ACTIONNEUR HYDRAULIQUE**
SYSTEM DER STEUERBEFEHLÜBERTRAGUNG AN EIN HYDRAULISCHES SERVOSTELLGLIED
COMMAND TRANSMISSION SYSTEM TO A HYDRAULIC SERVO ACTUATOR

(30) Priorité: 17.12.2021 FR 2113782
(43) Date de publication de la demande: 23.10.2024
(73) Titulaire: Safran Electronics & Defense, 75015 Paris (FR)
(72) Inventeur: HAUTECOEUR, Julien, 77550 MOISSY-CRAMAYEL (FR)
(74) Mandataire: Cabinet Camus Lebkiri
(86) Numéro de dépôt international: PCT/FR2022/052401
(87) Numéro de publication internationale: WO 2023/111484

(56) Documents cités:
- EP-A1- 1 331 404
- EP-A1- 3 213 990
- US-A- 5 806 805

## Description

### DOMAINE TECHNIQUE DE L'INVENTION

Le domaine technique de l'invention est celui des commandes de vol d'un aéronef.

La présente invention concerne un système de transmission de commande à un servo actionneur hydraulique.

### ARRIERE-PLAN TECHNOLOGIQUE DE L'INVENTION

Dans le domaine aéronautique, les commandes de vol d'un aéronef et en particulier d'un hélicoptère permettent à un pilote de commander et modifier la trajectoire de l'hélicoptère autour des trois axes : tangage, roulis et lacet. En particulier, les commandes de vol primaires d'un hélicoptère sont primordiales pour assurer un vol sécurisé et comportent trois types de systèmes : un système émetteur de commande tel que des pédales de commandes de direction, un levier de pas collectif et/ou une commande des gaz et un manche cyclique, des systèmes récepteurs de commandes tels qu'un rotor principal (pales) et un rotor anti couple et enfin des systèmes de transmission de commande entre les systèmes émetteurs et récepteurs, les systèmes de transmission pouvant être mécaniques et hydromécaniques .

Les transmissions mécaniques, apparues dans les premiers avions, sont composées de câbles sur poulies et/ou de biellettes, permettant au pilote d'exercer directement sa force sur les systèmes récepteurs de commandes, tels que les rotors dans un hélicoptère. Les transmissions mécaniques étant plus complexes à mettre en place et à utiliser dans des aéronefs lourd et grands, celles-ci ont été remplacées par des transmissions hydromécaniques et ne sont utilisées actuellement que dans des avions légers.

Une transmission hydromécanique comprend deux circuits : un circuit mécanique comportant par exemples des câbles et poulies et reliant les commandes du cockpit à un circuit hydraulique, le circuit hydraulique comportant des pompes hydrauliques, réservoirs, tuyaux, valves/servovalves et actionneurs hydrauliques. Le pilote émet une commande, en agissant sur les commandes dans le cockpit, qui sont transmises par le circuit mécanique au circuit hydraulique qui met en œuvre les actionneurs hydrauliques permettant de déplacer le rotor principal et le rotor anti-couple. Les transmissions hydromécaniques sont très utilisées dans les hélicoptères, cependant quelques hélicoptères comportant des transmissions électriques ont été développés.

Contrairement aux avions, les commandes électriques (De l'anglais "Fly-by-Wire"), comprenant des systèmes de transmission électriques, électroniques et informatiques sont encore très peu utilisées dans les hélicoptères. Dans un avion, les systèmes de transmission électriques, électroniques et informatiques transmettent des commandes de vol envoyées par un ordinateur de commande de vol ("FCC") à des actionneurs hydrauliques permettant de mettre en mouvement les gouvernes de l'avion.

L'utilisation d'une architecture Fly-By-Wire est avantageuse dans les avions car, les transmissions mécaniques entre les commandes actionnées par le pilote et les gouvernes d'un avion sont remplacées par des transmissions électriques ce qui permet de réduire les efforts physiques exercés par le pilote. De plus, l'architecture Fly-By-Wire est avantageuse par rapport aux architectures mécaniques et hydromécaniques citées précédemment car l'architecture Fly-by-Wire est facile à installer et à mettre en place et permet d'avoir des fonctions supplémentaires. Une telle architecture est par exemple connue à partir du document EP 3213990 A1.

Ainsi, dans un hélicoptère, un système de transmission électrique permet de commander les rotors par l'ordinateur de commande de vol (en anglais "FCC" : flight control computer) qui a pleine autorité et qui détermine leur mouvement grâce à la vitesse, la position, l'altitude, etc, de l'hélicoptère via des actionneurs hydrauliques.

Cependant, l'utilisation de commandes de vol électroniques actuelles comprend un inconvénient majeur : une défaillance de l'ordinateur de commande de vol et/ou du système de transmission électrique des commandes de vol aux actionneurs hydrauliques peut entrainer la perte de capacité à commander au moins un axe de l'hélicoptère, ce qui a pour conséquence l'altération de l'appareil.

Il existe donc un besoin de trouver une architecture de commande de vols permettant de s'affranchir des liaisons mécaniques entre les commandes et les actionneurs hydrauliques et de garantir une disponibilité élevée des commandes de vols, afin d'éviter l'altération de l'appareil piloté permettant de conserver l'architecture actuelle des actionneurs hydrauliques. En outre, la taille d'un hélicoptère nécessite une architecture de commande de vols électrique peu encombrante spatialement.

### RESUME DE L'INVENTION

L'invention offre une solution aux problèmes évoqués précédemment, en permettant de transmettre des commandes électriques émises par à un ordinateur de commande de vol à au moins un actionneur hydraulique, grâce à une architecture électromécanique offrant une disponibilité élevée des commandes de vol, tout en respectant un encombrement restreint.

Un premier aspect de l'invention concerne un système de transmission de commande à au moins un servo actionneur hydraulique comportant :
- Au moins un système mécanique comprenant :
   ∘ un actionneur électrique rotatif comportant une première voie comprenant un moteur, et une deuxième voie comportant un moteur ;
   ∘ un actionneur électrique linéaire comportant une troisième voie comportant un moteur, l'actionneur électrique linéaire étant relié à l'actionneur électrique rotatif par une première liaison mécanique et étant configuré pour être relié au servo actionneur hydraulique par une deuxième liaison mécanique ;
- Un système de commande comprenant :
   ∘ un premier dispositif de commande relié par une liaison électrique à la première voie de l'actionneur électrique rotatif dudit système mécanique,
   ∘ un deuxième dispositif de commande relié par une liaison électrique à la deuxième voie de l'actionneur électrique rotatif dudit système mécanique,
   ∘ un troisième dispositif de commande relié par une liaison électrique à la voie de l'actionneur électrique linéaire.

Grâce à l'invention, il est possible de s'affranchir des circuits entièrement mécaniques entre les commandes du cockpit et les servo-actionneurs hydrauliques d'un hélicoptère, ce qui permet de limiter les efforts exercés par un pilote dans le cockpit. L'invention permet de de plus conserver les servo-actionneurs utilisés actuellement dans les hélicoptères, permettant de réduire les coûts de production. En outre, la présence de trois voies permet avantageusement de garantir une disponibilité des commandes en cas de défaillance d'une voie.

Selon un mode de réalisation, le système de commande est configuré pour fonctionner selon au moins un mode parmi les modes de fonctionnement suivants :
- mode dit de fonctionnement nominal selon lequel :
   ∘ le premier dispositif de commande est dans un état de validité opérationnel, et est configuré pour :
      - recevoir une donnée par la première voie, la donnée concernant des paramètres de fonctionnement de ladite première voie ;
      - transmettre à un calculateur la donnée concernant les paramètres de fonctionnement reçus ;
      - recevoir une commande émise par le calculateur à destination du moteur de la première voie ;
      - émettre la commande vers le moteur de la première voie ;

      - le deuxième dispositif est dans un état de validité en veille et est configuré pour :
         - recevoir une donnée par la deuxième voie, la donnée concernant des paramètres de fonctionnement de ladite deuxième voie ;
         - émettre la donnée concernant les paramètres de fonctionnement reçus vers le calculateur ;
      - le troisième dispositif de commande est dans un état de validité opérationnel et est configuré pour :
         - recevoir une donnée par la troisième voie, la donnée concernant des paramètre de fonctionnement de ladite troisième voie ;
         - émettre vers calculateur la donnée concernant les paramètres de fonctionnement reçus ;
         - recevoir une commande émise par le calculateur à destination du moteur de la troisième voie, simultanément à la réception de la commande par le premier dispositif de commande,
         - émettre la commande vers le moteur de la troisième voie ;
- Mode dit de panne du premier dispositif de commande selon lequel :
   ∘ le premier dispositif de commande est dans un état de validité hors fonctionnement,
   ∘ le dispositif de commande est configuré pour passer d'un état de validité en veille à un état de validité opérationnel, le changement d'état du deuxième dispositif de commande résultant de l'état de validité hors fonctionnement du premier dispositif de commande, et est configuré pour :
      - recevoir une donnée par la deuxième voie, la donnée concernant des paramètre de fonctionnement de ladite deuxième voie ;
      - transmettre au calculateur la première donnée concernant les paramètres de fonctionnement reçus ;
      - recevoir par le calculateur une commande à émettre vers le moteur de la deuxième voie ;
      - émettre la commande vers le moteur de la deuxième voie ;
   ∘ le troisième dispositif de commande est dans un état de validité opérationnel et est configuré pour :
      - recevoir une donnée par la troisième voie, la deuxième donnée concernant des paramètre de fonctionnement de ladite troisième voie ;
      - transmettre au calculateur la donnée concernant les paramètres de fonctionnement reçus ;
      - recevoir par le calculateur, en même temps que le deuxième dispositif de commande, une commande à émettre vers le moteur de troisième voie ;
      - émettre la commande vers le moteur de troisième voie ;
- Mode dit de panne du troisième dispositif de commande selon lequel :
   ∘ le premier dispositif de commande est dans un état de validité opérationnel, et est configuré pour :
      - recevoir une donnée par la première voie, la donnée concernant des paramètre de fonctionnement de ladite première voie ;
      - transmettre au calculateur la donnée concernant les paramètres de fonctionnement reçus ;
      - recevoir par le calculateur au moins une commande à émettre vers le moteur de la première voie ;
      - émettre la commande vers le moteur de la première voie
   ∘ le deuxième dispositif est dans un état de validité en veille et est configuré pour :
      - recevoir au moins une donnée par la deuxième voie, la donnée concernant des paramètre de fonctionnement de ladite voie ;
      - transmettre au calculateur la donnée concernant les paramètres de fonctionnement reçus ;
   ∘ le troisième dispositif de commande est dans un état hors fonctionnement.

Pour chaque mode de fonctionnement, la somme de chaque commande reçue respectivement par le moteur de la première voie ou le moteur de la deuxième voie et/ou le moteur de la troisième voie assure la commande mécanique du servo actionneur hydraulique.

On entend par état de validité opérationnel d'un dispositif de commande un état durant lequel le dispositif de commande peut recevoir des commandes émises par le calculateur, destinées au moteur auquel est relié ledit dispositif de commande, et peut transmettre les commandes au moteur auquel ledit dispositif de commande est relié et durant lequel le dispositif de commande peut recevoir des données par la voie à laquelle il est relié.

On entend état de validité en veille d'un dispositif de commande, un état durant lequel le dispositif de commande reçoit des données par la voie à laquelle il est relié et durant lequel le dispositif de commande ne peut transmettre aucune commande vers le moteur auquel ledit dispositif de commande est relié.

On entend par état de validité défectueux d'un dispositif de commande, un état de validité durant lequel la liaison électrique entre le dispositif de commande et sa voie est rompue et aucune communication électrique entre les deux n'est possible.

Avantageusement, chaque commande émise par le calculateur est répartie en fonction des dispositifs de commande opérationnels, ce qui permet de commander le servo-actionneur hydraulique même lorsqu'un dispositif de commande est défectueux, et de garantir une disponibilité des commandes. Ainsi, la commande du servo-actionneur hydraulique est le résultat d'au moins une commande reçue par un moteur mettant en mouvement l'actionneur électrique dans lequel ledit moteur est compris.

Selon un mode de réalisation de l'invention, une commande émise par le calculateur vers un dispositif de commande comprend une consigne de position destinée au moteur compris dans la voie reliée au dit dispositif de commande.

Selon un mode de réalisation de l'invention :
- la première voie comprend un capteur de position moteur et un capteur de position rotatif;
- la deuxième voie comprend un capteur de position moteur et un capteur de position rotatif;
- la troisième voie comprend un troisième capteur de position moteur et un capteur de position linéaire;
une donnée reçue par une voie parmi la première, deuxième et troisième voie concernant les paramètres de fonctionnement de cette voie comprend :
- une donnée concernant la position du moteur compris dans la voie et/ou
- une donnée concernant la position de l'actionneur dans lequel est comprise ladite voie.

Le capteur de position rotatif compris dans la première voie est un capteur de position de l'actionneur rotatif.

Le capteur de position rotatif compris dans la deuxième voie est un capteur de position de l'actionneur rotatif.

Le capteur de position linéaire compris dans la troisième voie est un capteur de position de l'actionneur linéaire.

Avantageusement, le mode de réalisation cité précédemment permet de connaitre la position de chaque moteur et de chaque actionneur afin que le calculateur puisse recalculer la commande en position vers chaque moteur relié à un dispositif de commande opérationnel, la somme chaque commande permettant d'obtenir un déplacement souhaité du servo-actionneur.

Selon un mode de réalisation l'actionneur rotatif est irréversible.

Selon un mode de réalisation l'actionneur linéaire est irréversible.

Selon un mode de réalisation le système de commande est compris dans l'actionneur rotatif ou dans l'actionneur linéaire.

Selon un mode de réalisation la première liaison mécanique et la deuxième liaison mécanique sont en série.

Selon un mode de réalisation le système comprend quatre systèmes mécaniques. Ce mode de réalisation permet avantageusement de commander 4 servo-actionneurs.

Un deuxième aspect de l'invention concerne un ensemble de commande d'au moins un servo actionneur hydraulique comprenant :
- un module de commande ;
- un système selon le premier aspect de l'invention ;
- au moins un servo actionneur hydraulique ;

Un troisième aspect de l'invention concerne un aéronef comprenant un système de commande selon la revendication précédente.

### BREVE DESCRIPTION DES FIGURES

Les figures sont présentées à titre indicatif et nullement limitatif de l'invention.
- La figure 1 [Fig. 1] montre une représentation schématique d'un ensemble de commande d'au moins un servo-actionneur hydraulique, comprenant un système de transmission de commande selon l'invention ;
- La figure 2 [Fig. 2] est un schéma d'un actionneur électrique rotatif compris dans le système de transmission selon l'invention ;
- La figure 3 [Fig. 3] est un schéma d'un actionneur électrique linéaire compris dans le système de transmission selon l'invention ;
- La figure 4 [Fig. 4] est un schéma d'un mode de réalisation d'un dispositif de commande ;
- La figure 5 [Fig. 5] est un schéma de l'ensemble de commande d'au moins un servo actionneur hydraulique lorsque le système de transmission selon l'invention est dans un mode de fonctionnement dit nominal ;
- La figure 6 [Fig. 6] est un schéma de l'ensemble de commande d'au moins un servo actionneur hydraulique lorsque le système de transmission selon l'invention est dans un mode de fonctionnement dit panne du premier dispositif de commande ;
- La figure 7 [Fig. 7] est un schéma de l'ensemble de commande d'au moins un servo actionneur hydraulique lorsque le système de transmission selon l'invention est dans un mode de fonctionnement dit panne du troisième dispositif de commande.

### DESCRIPTION DETAILLEE

Les figures sont présentées à titre indicatif et nullement limitatif de l'invention.

Sauf précision contraire, un même élément apparaissant sur des figures différentes présente une référence unique.

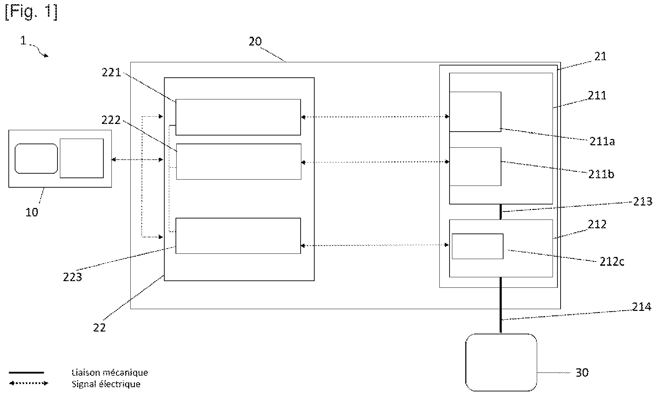

La figure 1 [Fig. 1] montre une représentation schématique d'un mode de réalisation de l'ensemble de commande 1 d'au moins un servo-actionneur.

L'ensemble 1 est compris dans un aéronef. De préférence, l'aéronef est un hélicoptère.

L'ensemble de commande 1 comprend un module de contrôle 10, un système de transmission 20 de commande à au moins un servo actionneur hydraulique selon l'invention et un servo actionneur hydraulique 30.

Selon un mode de réalisation, non représenté sur la figure 1, l'ensemble de commande 1 comprend quatre servo actionneurs hydrauliques 30.

Le module de contrôle 10 comprend au moins un calculateur 11 et au moins une alimentation électrique 12.

Le calculateur 11 comprend un processeur non représenté sur la figure 1.

De préférence le calculateur est un ordinateur de commande de vol (de l'anglais "FCC : Flight Control Computer").

Selon un mode de réalisation préféré, dans lequel l'ensemble de commande comprend quatre servo actionneurs 30, le module de contrôle 10 comprend quatre calculateurs 11.

L'alimentation électrique 12 comprend de préférence une première et une deuxième sortie, non représentées dans la figure 1, configurées pour délivrer chacune une tension, de préférence une tension continue.

De préférence, la valeur tension délivrée par la première sortie 12a et/ou la deuxième sortie 12b vaut 28 volts.

Le système de transmission 20 comporte au moins un système de commande 22 électronique et comporte au moins un système mécanique 21.

Le système de commande 22 comprend un premier, un deuxième et un troisième dispositif de commande 221, 222, 223, chaque dispositif de commande étant relié aux deux autres par une liaison électrique.

Le système mécanique 21 comprend un actionneur électrique rotatif 211 et un actionneur électrique linéaire 212.

L'actionneur électrique rotatif 211 comprend une première voie 211a liée par une liaison électrique au premier dispositif de commande 221. La liaison électrique comprend au moins un signal électrique. Le signal électrique peut être numérique ou analogique.

L'actionneur électrique rotatif 211 comprend une deuxième voie 211b liée par une liaison électrique au premier dispositif de commande 222. La liaison électrique comprend au moins un signal électrique. Le signal numérique peut être numérique ou analogique.

L'actionneur électrique linéaire 212 comprend une troisième voie 212c liée par une liaison électrique au troisième dispositif de commande 223. La troisième liaison électrique comprend au moins un signal électrique. Le signal électrique peut être numérique ou analogique.

L'actionneur rotatif 211 est lié par une première liaison mécanique 213 à l'actionneur électrique linéaire 212 et l'actionneur linéaire 211 est lié par une deuxième liaison mécanique 214 au servo actionneur hydraulique 30.

La première liaison mécanique 213 est de préférence une liaison pivot et la deuxième liaison mécanique 214 est de préférence une liaison pivot.

Selon un mode de réalisation préféré, la première liaison mécanique 213 et la deuxième liaison mécanique 214 sont en série.

Selon le mode de réalisation préféré dans lequel l'ensemble de commande 1 comprend quatre servo actionneurs, et le module de contrôle 10 comprend quatre calculateurs, le système de transmission 20 comprend quatre systèmes mécaniques 21, chaque calculateur 11 étant associé à un système mécanique 21 et à un servo actionneur hydraulique 30 auquel est relié le système mécanique 21.

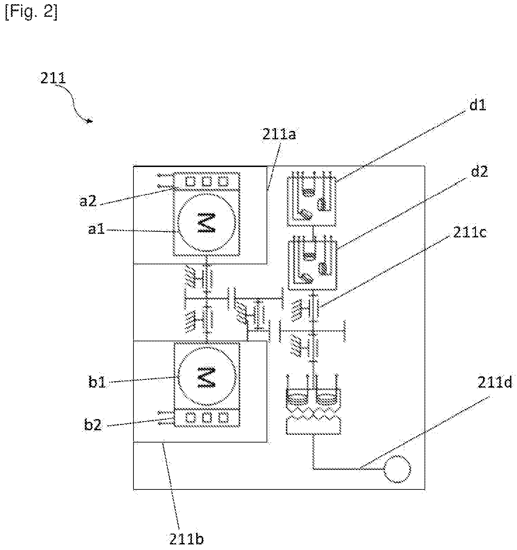

La figure 2 [Fig. 2] est une représentation schématique de l'actionneur électrique rotatif 211 compris dans le système mécanique 21. L'actionneur rotatif 211 comprend la première voie 211a et la deuxième voie 211b.

L'actionneur électrique rotatif 211 peut comprendre un premier réducteur 211c et un arbre de sortie 211d.

La première voie 211a de l'actionneur rotatif 211 comprend un moteur a1, de préférence un moteur sans balai, et un capteur de position moteur a2, configuré pour mesurer la position du moteur a1 de la première voie 211a.

De préférence, le moteur a1 de la première voie 211a est un moteur triphasé et comprend trois entrées triphasées, non représentées sur la figure 2.

De préférence, le capteur de position moteur a2 de la première voie 211a est un capteur à effet Hall (de l'anglais " Hall Effet Sensor")

La deuxième voie 211b de l'actionneur 211 comprend un moteur b1, de préférence un moteur sans balai, et un capteur de position moteur b2, configuré pour mesurer la position du moteur b1 de la deuxième voie 211b.

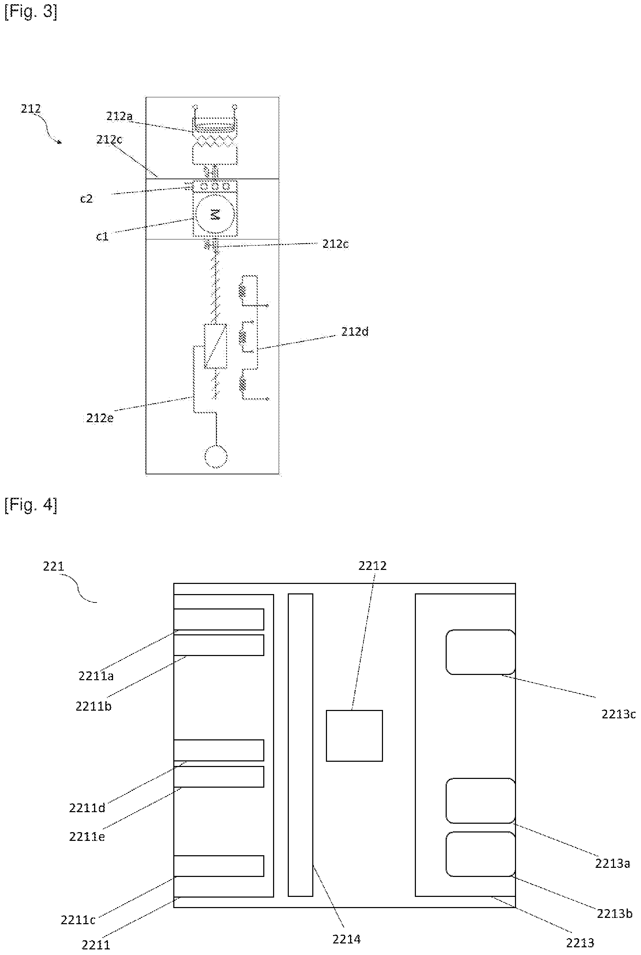

De préférence le moteur b1 de la deuxième voie 211b est un moteur triphasé et comprend trois entrées triphasées, non représentées sur la figure 3.

De préférence, le capteur de position moteur b2 de la deuxième voie 211b est un capteur à effet Hall.L'arbre de sortie 211d comprend de préférence un premier capteur de position angulaire d1, un deuxième capteur de position angulaire d2, un frein d3, de préférence un frein d'embrayage à crabots à commande électrique à double alimentation .

De préférence le premier capteur de position angulaire d1 est relié à la première voie 211a, et le deuxième capteur de position angulaire d2 est relié à la deuxième voie 211b.

Selon un mode de réalisation non représenté sur la figure 2 [Fig. 2], le premier capteur de position angulaire d1 est compris dans la première voie 211a, et le deuxième capteur de position angulaire d2 est compris dans la deuxième voie 211b.

Le frein d3 est de préférence un frein à manque de courant .

Le premier et deuxième capteur de position angulaire (d1, d2) sont configurés pour mesurer la position de l'actionneur électrique rotatif 211.

Lorsque l'arbre de sortie 211d comprend le frein d'embrayage à crabots à commande électrique à double alimentation, ledit frein d'embrayage permet d'assurer l'irréversibilité de l'actionneur rotatif 211.

La figure 3 [Fig. 3] est une représentation schématique de l'actionneur électrique linéaire 212 compris dans le système mécanique 21.

L'actionneur électrique linéaire 212 comprend la troisième voie 212c.

L'actionneur électrique linéaire 212 peut comprendre un réducteur 212b, un frein 212a, un capteur de position linéaire 212d et une vis à billes 212e.

Le frein 212a est de préférence un frein d'embrayage à crabots à commande électrique à double alimentation.

Le frein 212a est de préférence un frein à manque de courant.

Lorsque l'actionneur électrique linéaire 212 comprend le frein d'embrayage à crabots à commande électrique, l'actionneur électrique linéaire 212 est irréversible.

La troisième voie 212c de l'actionneur électrique linéaire 212 comprend un moteur c1, de préférence un moteur sans balai, et un capteur de position moteur c2 configuré pour mesurer la position du moteur c1.

De préférence le moteur c1 de la troisième voie 212c est un moteur triphasé et comprend une entrée triphasée, non représentée sur la figure 3.

De préférence, le capteur de position moteur c2 de la troisième voie 212c est un capteur à effet Hall.Selon un mode de réalisation, le capteur de position linéaire 212d est compris dans la troisième voie 212c.

La figure 4 [Fig. 4] est une représentation schématique d'un mode de réalisation du premier dispositif de commande 221 compris dans le système de commande 22.

Les premier, deuxième et troisième dispositifs (221,222,223) de commande ayan une architecture identique, seul le premier dispositif de commande 221 est représenté.

Le premier dispositif de commande 221, comprend un premier module de commande 2211, un circuit numérique 2212 et un module d'actionnement 2213.

La module de commande 2211 peut comprendre un premier et un deuxième ports d'alimentation électrique (2211a, 2211b), configurés pour recevoir une tension électrique, de préférence une tension continue d'une valeur de 28V.

La module de commande 2211 comprend au moins un port de commande 2211c.

Selon le mode de réalisation selon lequel le module de contrôle 10 comprend quatre calculateurs, la pluralité de ports d'entrée 222 comprend quatre ports de commandes dont chaque port de commande est relié électriquement respectivement à un calculateur parmi les quatre calculateurs.

Le module de commande 2211 comprend un port de données d'entrée en série 2211d (de l'anglais DSI : Data Serial Input), un port de données de sorties en série 2211e (de l'anglais DSO : Data Serial Output).

Selon un mode de réalisation, le module de commande 2211 comprend un port de communication, non représenté sur la figure 4. Ledit port de communication est configuré pour recevoir des instructions logicielles, par exemple.

Le premier dispositif de commande 221 peut comprendre un module de filtrage 2214 configuré pour réaliser un traitement des signaux transmis par le module de commande 2211.

Le traitement des signaux transmis peut être par exemple la réduction des bruits compris dans les signaux reçus.

Le circuit numérique 223 est configuré pour traiter des signaux reçus par le module de commande et les transmettre au module d'actionnement 2213.

Le circuit numérique 223 est configuré pour traiter des signaux reçus par le module d'actionnement 2213 et les transmettre au module de commande 2211.

Le module d'actionnement 2213 comprend module de pilotage de moteur 2213a, au moins un module de réception de données 2213b et un module de pilotage de frein 2213c.

Le module de pilotage de moteur 221a comprend une sortie triphasée, la sortie triphasée comportant trois courants électriques, de préférence trois courants électriques continus.

Le module de pilotage de frein 2213c délivre une sortie biphasée, la sortie biphasée comportant deux courants électriques, de préférence deux courants électriques continus.

Le module de réception de données 2213 comprend de préférences deux ports.

Le système de transmission 20 selon l'invention fonctionne selon au moins un mode parmi les modes de fonctionnement suivants : mode de fonctionnement dit nominal, mode de fonctionnement dit de panne du premier dispositif de commande et mode de fonctionnement dit de panne du troisième dispositif de commande.

Durant chaque mode de fonctionnement parmi les modes de fonctionnement cités, les dispositifs de commande peuvent être respectivement chacun dans un état de validité parmi au moins les trois états de validité suivants : état de validité opérationnel, état de validité en veille, état de validité défectueux.

On entend par état de validité opérationnel d'un dispositif de commande un état de validité durant lequel le dispositif de commande est configuré pour mettre en œuvre une pluralité d'étapes opérationnelles décrites dans la suite.

Une première étape opérationnelle est une étape de réception par le dispositif de commande d'une donnée par la voie reliée au dit dispositif de commande, via le module de réception de données, la donnée concernant des paramètres de fonctionnement de ladite voie.

La donnée concernant les paramètres de fonctionnement de la première voie comprend une donnée concernant la position du moteur de la voie reliée au dispositif de commande et/ou une donnée concernant la position de l'actionneur électrique comprenant la voie reliée au dispositif de commande.

La donnée concernant la position du moteur de la voie reliée au dit dispositif de commande est mesurée par le capteur de position moteur de ladite voie.

Une deuxième étape opérationnelle est une étape de transmission au calculateur 10, via le port de commande 2211c, la donnée concernant les paramètres de fonctionnement reçus.

Une troisième étape opérationnelle est une étape de réception d'une commande émise par le calculateur 10, via le port de commande 2211c, à destination du moteur de la voie reliée au dispositif de commande.

La commande à destination du moteur est de préférence une commande en position dudit moteur. De préférence, la commande en position dudit moteur est une valeur réelle, ayant de préférence une unité en mm.

Une quatrième étape opérationnelle est une étape d'émission de la commande vers le du moteur compris dans la voie reliée au dispositif de commande.

On entend état de validité en veille d'un dispositif de commande, un état durant lequel le dispositif de commande est configuré pour mettre œuvre des étapes de veille.

Une première étape de veille est une étape de réception par le dispositif de commande d'une donnée par la voie reliée au dit dispositif de commande, via le module de réception de données, la donnée concernant des paramètres de fonctionnement de ladite voie.

La donnée concernant les paramètres de fonctionnement de la première voie comprend une donnée concernant la position du premier moteur compris dans la voie reliée au dit dispositif de commande et/ou une donnée concernant la position de l'actionneur comprenant la voie reliée au dit dispositif de commande.

Une deuxième étape de veille est une étape de transmission au calculateur 10, via le port de commande 2211c, la donnée concernant les paramètres de fonctionnement reçus.

On entend par état de validité défectueux d'un dispositif de commande, un état de validité durant lequel la liaison électrique entre le dit dispositif de commande et sa voie est rompue et aucune communication entre les deux n'est possible. De plus, la liaison électrique entre le dit dispositif de commande et le calculateur 10 est rompue et aucune communication entre les deux n'est possible.

Chaque dispositif de commande parmi le premier, deuxième et troisième dispositif de commande (221,222,223) est configuré pour communiquer son état de validité aux autres dispositifs via le module de commande 2211 et plus précisément via le port de données de sorties en série 2211e.

Chaque dispositif de commande parmi le premier, deuxième et troisième dispositif de commande (221,222,223) est configuré pour recevoir l'état de validité des autres dispositifs via le module de commande 2211 et plus précisément via le port de données d'entrées en série 2211d.

Chaque dispositif de commande parmi le premier, deuxième et troisième dispositif de commande (221,222,223) est configuré pour communiquer son état de validité au calculateur 10 via le port de commande 2211c.

Le calculateur 10 émet simultanément une commande vers chaque dispositif de commande étant dans un état de validité opérationnel, la commande étant destinée au moteur de la voie reliée au dit dispositif.

De préférence, la commande comprend une fraction de valeur de position souhaitée pour le servo-actionneur hydraulique 30.

De présence, la fraction de la valeur de position souhaitée du servo-actionneur hydraulique 30 est déterminée en di d'une valeur de position souhaitée du servo-actionneur hydraulique et du nombre de dispositifs de commande opérationnels.

Par exemple, la fraction de la valeur de position souhaitée est obtenue en divisant la valeur de position souhaitée du servo-actionneur par le nombre de dispositifs de commande opérationnels.

Ainsi, la commande du servo actionneur hydraulique 30 résulte de la somme des valeurs comprises dans les commandes reçues respectivement par chaque dispositif de commande étant dans un état de validité opérationnel.

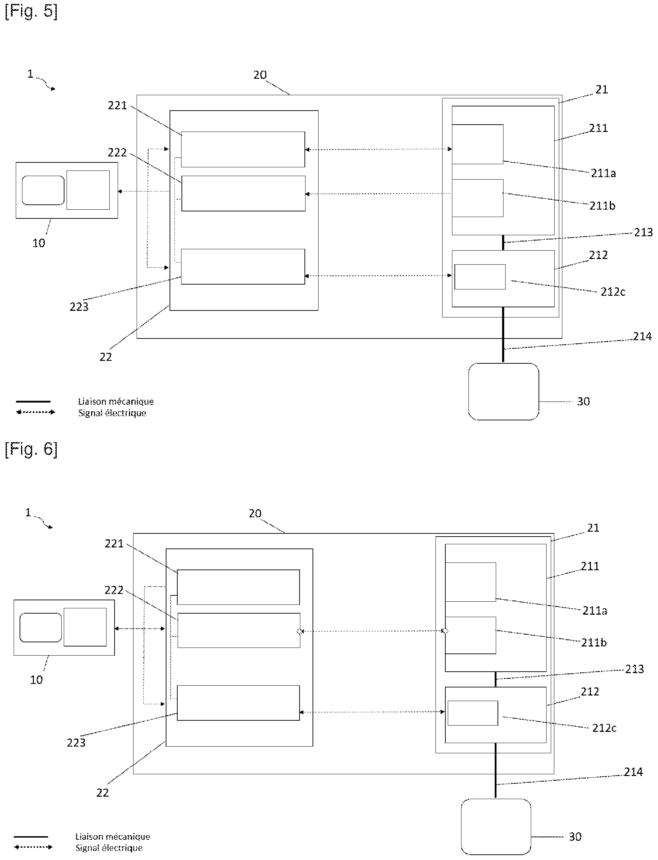

La figure 5 [Fig. 5] représente l'ensemble de commande 1, lorsque le système selon l'invention fonctionne selon un mode dit de fonctionnement nominal.

Selon le mode de fonctionnement nominal, le premier dispositif de commande 211 est dans un état de validité opérationnel, le deuxième dispositif de commande 212 est dans un état de validité en veille et le troisième dispositif de commande 213 est dans un état de validité opérationnel.

Par exemple, lorsque le mode de fonctionnement du système de transmission 20 selon l'invention est dit nominal, afin de déplacer le servo actionneur hydraulique 30 d'une valeur égale à X, le calculateur 11 envoie une commande comprenant une valeur égale à X/2 au premier dispositif de commande 221 opérationnel, et une commande comprenant une valeur égale à X/2 au troisième dispositif de commande 223 opérationnel.

Ainsi, le moteur a1 de la première voie 211a reçoit une commande en position dont la valeur est égale à X/2, permettant à l'actionneur rotatif 211 de se déplacer d'une valeur égale à X/2 et de mettre en mouvement l'actionneur linéaire 212 grâce à la première liaison mécanique. De plus, le moteur c1 de la troisième voie 212c reçoit, simultanément à la réception de la commande par le moteur a1 de la première voie 211a, une commande en position émise par le calculateur dont la valeur est égale à X/2, permettant de déplacer l'actionneur linéaire 212 d'une valeur égale à X/2. Ainsi, l'actionneur linéaire 212 reçoit une commande électrique de valeur X/2, et une commande mécanique de valeur X/2, l'actionneur linéaire se déplace donc d'une valeur X et permet de déplacer, via la deuxième liaison mécanique 214, le servo actionneur hydraulique 30 selon une valeur X.

La figure 6 [Fig. 6] représente l'ensemble de commande 1, lorsque le système selon l'invention fonctionne selon un mode dit de panne du premier dispositif de commande 211.

Selon le mode de fonctionnement dit de panne du premier dispositif de commande 211, le premier dispositif de commande 211 est dans un état de validité défectueux, le deuxième dispositif 212 de commande est configuré pour passer d'un état de validité en veille à un état de validité opérationnel, le changement d'état du deuxième dispositif de commande 212 résultant de l'état de validité hors fonctionnement du premier dispositif de commande 211 et le troisième dispositif de commande 213 est dans un état de validité opérationnel.

Par exemple, lorsque le mode de fonctionnement du système de transmission 20 selon l'invention est dit de panne du premier dispositif 221, quand le calculateur 10 souhaite obtenir une position du servo actionneur hydraulique d'une valeur égale à X, le calculateur envoie une commande comprenant une valeur égale à X/2 au deuxième dispositif de commande 222 opérationnel, et une commande comprenant une valeur égale à X/2 au troisième dispositif de commande 223 opérationnel.

Ainsi, le moteur b1 de la deuxième voie 211b reçoit une commande en position dont la valeur est égale à X/2, permettant à l'actionneur rotatif 211 de se déplacer d'une valeur égale à X/2 et de mettre en mouvement l'actionneur linéaire 212 grâce à la première liaison mécanique. De plus, le moteur c1 de la troisième voie 212c reçoit, simultanément à la réception de la commande par le moteur b1 de la deuxième voie 211b, une commande en position dont la valeur est égale à X/2, permettant de déplacer l'actionneur linéaire 212 d'une valeur égale à X/2. Ainsi, l'actionneur linéaire 212 reçoit une commande électrique de valeur X/2, et une commande mécanique de valeur X/2, l'actionneur linéaire se déplace donc d'une valeur X et permet de déplacer, via la deuxième liaison mécanique 214, le servo actionneur hydraulique 30 selon une valeur X.

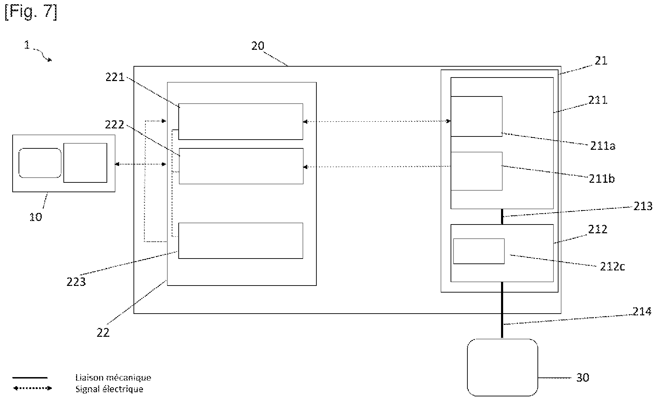

La figure 7 [Fig. 7] représente l'ensemble de commande 1, lorsque le système selon l'invention fonctionne selon un mode dit de panne du troisième dispositif de commande 211.

Selon le mode de fonctionnement dit de panne du troisième dispositif de commande 213, le premier dispositif de commande 211 est dans un état de validité opérationnel, le deuxième dispositif 212 de commande est dans un état de validité de veille et le troisième dispositif de commande 213 est dans un état de validité défectueux.

Par exemple, lorsque le mode de fonctionnement du système de transmission 20 selon l'invention est dit nominal, lorsque le calculateur 10 souhaite obtenir une position du servo actionneur hydraulique d'une valeur égale à X, le calculateur envoie une commande comprenant une valeur égale à X au premier dispositif de commande 221 opérationnel.

Ainsi, le moteur a1 de la première voie 211a reçoit une commande en position dont la valeur est égale à X, permettant à l'actionneur rotatif 211 de se déplacer d'une valeur égale à X et de mettre en mouvement l'actionneur linéaire 212 grâce à la première liaison mécanique. Dans ce mode de fonctionnement, l'actionneur linéaire 212 reçoit uniquement une commande en position mécanique, égale à X. L'actionneur linéaire 212 se déplace donc d'une valeur X et permet de déplacer, via la deuxième liaison mécanique 214, le servo actionneur hydraulique 30 selon une valeur X.

## Revendications

1. Système de transmission de commande (20) à au moins un servo actionneur hydraulique (30) comportant :
- Au moins un système mécanique (21) comprenant :
∘ un actionneur électrique rotatif (211) comportant une première voie (211a) comprenant un moteur (a1), et une deuxième voie (211b) comportant un moteur (b1) ;
∘ un actionneur électrique linéaire (212) comportant une troisième voie (212c) comportant un moteur (c1), l'actionneur électrique linéaire (212) étant relié à l'actionneur électrique rotatif (211) par une première liaison mécanique (213) et étant configuré pour être relié au servo actionneur hydraulique (30) par une deuxième liaison mécanique (214) ;
- Un système de commande (22) comprenant :
∘ un premier dispositif de commande (221) relié par une liaison électrique à la première voie (211a) de l'actionneur électrique rotatif (211) dudit système mécanique (21),
∘ un deuxième dispositif de commande (222) relié par une liaison électrique à la deuxième voie (211b) de l'actionneur électrique rotatif (211) dudit système mécanique (21),
∘ un troisième dispositif de commande (223) relié par une liaison électrique à la troisième voie (212c) de l'actionneur électrique linéaire (212).

2. Système de transmission de commande (20) selon la revendication précédente selon lequel, le système de commande (22) est configuré pour fonctionner selon au moins un mode parmi les modes de fonctionnement suivants :
- mode dit de fonctionnement nominal selon lequel :
∘ le premier dispositif de commande (221) est dans un état de validité opérationnel, et est configuré pour :
• recevoir une donnée par la première voie (211a), la donnée concernant des paramètres de fonctionnement de ladite première voie (211a) ;
• transmettre à un calculateur (11) la donnée concernant les paramètres de fonctionnement reçus ;
• recevoir une commande émise par le calculateur (11) à destination du moteur (a1) de la première voie (211a) ;
• émettre la commande vers le moteur (a1) de la première voie (211a) ;
∘ le deuxième dispositif (222) est dans un état de validité en veille et est configuré pour :
• recevoir une donnée par la deuxième voie (211b), la donnée concernant des paramètres de fonctionnement de ladite deuxième voie (211b) ;
• émettre la donnée concernant les paramètres de fonctionnement reçus vers le calculateur (11) ;
∘ le troisième dispositif de commande (223) est dans un état de validité opérationnel et est configuré pour :
• recevoir une donnée par la troisième voie (212c), la donnée concernant des paramètre de fonctionnement de ladite troisième voie (212c) ;
• émettre vers calculateur (11) la donnée concernant les paramètres de fonctionnement reçus ;
• recevoir une commande émise par le calculateur (11) à destination du moteur (c1) de la troisième voie (212c), simultanément à la réception de la commande par le premier dispositif de commande (221),
• émettre la commande vers le moteur (c1) de la troisième voie (212c) ;
- Mode dit de panne du premier dispositif de commande selon lequel :
∘ le premier dispositif de commande (221) est dans un état de validité hors fonctionnement,
∘ le deuxième dispositif de commande (222) est configuré pour passer d'un état de validité en veille à un état de validité opérationnel, le changement d'état du deuxième dispositif de commande (222) résultant de l'état de validité hors fonctionnement du premier dispositif de commande (221), et est configuré pour :
• recevoir une donnée par la deuxième voie (211b), la donnée concernant des paramètre de fonctionnement de ladite deuxième voie (211b) ;
• transmettre au calculateur (11) la première donnée concernant les paramètres de fonctionnement reçus ;
• recevoir par le calculateur (11) une commande à émettre vers le moteur (b1) de la deuxième voie (211b) ;
• émettre la commande vers le moteur (b1) de la deuxième voie (211b) ;
∘ le troisième dispositif de commande (223) est dans un état de validité opérationnel et est configuré pour :
• recevoir une donnée par la troisième voie (212c), la deuxième donnée concernant des paramètre de fonctionnement de ladite troisième voie (212c) ;
• transmettre au calculateur (11) la donnée concernant les paramètres de fonctionnement reçus ;
• recevoir par le calculateur (11), simultanément à la réception de la commande par le deuxième dispositif de commande (222), une commande à émettre vers le moteur (c1) de la troisième voie (212c) ;
• émettre la commande vers le moteur (c1) de la troisième voie (212c) ;
- Mode dit de panne du troisième dispositif de commande selon lequel :
∘ le premier dispositif de commande (221) est dans un état de validité opérationnel, et est configuré pour :
• recevoir une donnée par la première voie (211a), la donnée concernant des paramètre de fonctionnement de ladite première voie (211a) ;
• transmettre au calculateur (11) la donnée concernant les paramètres de fonctionnement reçus ;
• recevoir par le calculateur (11) au moins une commande à émettre vers le moteur (a1) de la première voie (211a) ;
• émettre la commande vers le moteur (a1) de la première voie (211a) ;
∘ le deuxième dispositif de commande (222) est dans un état de validité en veille et est configuré pour :
• recevoir au moins une donnée par la deuxième voie (211b), la donnée concernant des paramètre de fonctionnement de ladite deuxième voie (211b) ;
• transmettre au calculateur (11) la donnée concernant les paramètres de fonctionnement reçus ;
o le troisième dispositif de commande (223) est dans un état hors fonctionnement ;
pour chaque mode de fonctionnement, la somme de chaque commande reçue respectivement par le moteur (a1) de la première voie (211a) ou le moteur (b1) de la deuxième voie (211b) et/ou le moteur (c1) de la troisième voie (212c) assure la commande mécanique du servo actionneur hydraulique (30).

3. Système de transmission de commande (20) selon la revendication précédente selon lequel :
- la première voie (211a) comprend un capteur de position moteur (a2) et un capteur de position rotatif (d1) ;
- La deuxième voie (211b) comprend un capteur de position moteur (b2) et un capteur de position rotatif (d2) ;
- la troisième voie (212c) comprend un troisième capteur de position moteur (c2) et un capteur de position linéaire (212c) ;
et selon lequel une donnée reçue par une voie parmi la première, deuxième et troisième voie concernant les paramètres de fonctionnement de cette voie comprend :
- une donnée concernant la position du moteur compris dans la voie et/ou
- une donnée concernant la position de l'actionneur dans lequel est comprise ladite voie.

4. Système de transmission de commande (20) selon l'une des quelconques revendications 2 à 3 selon lequel une commande émise par le calculateur (11) vers un dispositif de commande comprend une consigne de position destinée au moteur compris dans la voie reliée au dit dispositif de commande.

5. Système de transmission de commande (20) selon l'une quelconques des revendications précédentes selon lequel l'actionneur rotatif (211) est irréversible.

6. Système de transmission de commande (20) selon l'une quelconques des revendications précédentes selon lequel l'actionneur linéaire (212) est irréversible.

7. Système de transmission de commande (20) selon l'une quelconque des revendications précédentes selon lequel la première liaison mécanique (213) et la deuxième liaison mécanique (214) sont en série.

8. Système de transmission de commande (20) selon l'une des quelconques revendications précédentes comprenant quatre systèmes mécaniques (21).

9. Ensemble de commande (1) d'au moins servo actionneur hydraulique (30) **caractérisé en ce qu'**il comprend :
- un module de contrôle (10) ;
- un système de transmission de commande (20) selon les revendications 1 à 8 ;
- au moins un servo actionneur hydraulique (30).

10. Aéronef (A) comprenant un ensemble de commande (1) selon la revendication précédente.

## Patentansprüche

1. Steuerungsübertragungssystem (20) mit mindestens einem hydraulischen Servostellantrieb (30), umfassend:
- Mindestens ein mechanisches System (21) mit:
∘ einem elektrischen Drehantrieb (211) mit einem ersten Kanal (21 1a), der einen Motor (a1) umfasst, und einem zweiten Kanal (211b), der einen Motor (b1) umfasst;
∘ einen elektrischen Linearantrieb (212) mit einem dritten Kanal (212c), der einen Motor (c1) umfasst, wobei der elektrische Linearantrieb (212) über eine erste mechanische Verbindung (213) mit dem elektrischen Drehantrieb (211) verbunden ist und so gestaltet ist, dass er über eine zweite mechanische Verbindung (214) mit dem hydraulischen Servostellantrieb (30) verbunden werden kann;
- Ein Steuersystem (22) mit:
∘ einer ersten Steuervorrichtung (221), die über eine elektrische Verbindung mit dem ersten Kanal (211a) des elektrischen Drehantriebs (211) des mechanischen Systems (21) verbunden ist,
∘ einer zweiten Steuervorrichtung (222), die über eine elektrische Verbindung mit dem zweiten Kanal (211b) des elektrischen Drehantriebs (211) des mechanischen Systems (21) verbunden ist,
∘ einer dritten Steuervorrichtung (223), die über eine elektrische Verbindung mit dem dritten Kanal (212c) des elektrischen Linearantriebs (212) verbunden ist.

2. Steuerungsübertragungssystem (20) nach dem vorherigen Anspruch, bei dem das Steuersystem (22) so gestaltet ist, dass es in mindestens einem der folgenden Betriebsmodi arbeitet:
- einem sogenannten Nennbetriebsmodus, in dem
∘ die erste Steuervorrichtung (221) in einem betriebsbereiten Zustand ist und so gestaltet ist, dass sie:
• über den ersten Kanal (211a) Daten empfängt, wobei die Daten Betriebsparameter des ersten Kanals (211a) betreffen;
• die Daten bezüglich der empfangenen Betriebsparameter an einen Rechner (11) überträgt;
• einen vom Rechner (11) an den Motor (a1) des ersten Kanals (211a) gesendeten Befehl empfängt;
• den Befehl an den Motor (a1) des ersten Kanals (211a) sendet;
∘ die zweite Steuervorrichtung (222) sich in einem Standby-Zustand befindet und so gestaltet ist, dass sie:
• Daten über den zweiten Kanal (211b) empfängt, wobei die Daten Betriebsparameter des zweiten Kanals (211b) betreffen;
• die Daten über die empfangenen Betriebsparameter an den Rechner (11) sendet;
∘ die dritte Steuervorrichtung (223) sich in einem betriebsbereiten Zustand befindet und so gestaltet ist, dass sie:
• über den dritten Kanal (212c) Daten empfängt, wobei die Daten Betriebsparameter des dritten Kanals (212c) betreffen;
• die empfangenen Daten über die Betriebsparameter an den Rechner (11) sendet;
• einen Befehl, der vom Rechner (11) an den Motor (c1) des dritten Kanals (212c) gesendet wird, gleichzeitig mit dem Empfang des Befehls durch die erste Steuervorrichtung (221) empfängt,
• den Befehl an den Motor (c1) des dritten Kanals (212c) sendet;
- einem sogenannten Ausfallmodus der ersten Steuervorrichtung, in dem:
∘ die erste Steuervorrichtung (221) sich in einem nicht funktionsfähigen Zustand befindet,
∘ die zweite Steuervorrichtung (222) so gestaltet ist, dass sie von einem Standby-Zustand in einen betriebsbereiten Zustand wechselt, wobei der Zustandswechsel der zweiten Steuervorrichtung (222) aus dem nicht funktionsfähigen Zustand der ersten Steuervorrichtung (221) resultiert, und so gestaltet ist, dass sie:
• Daten über den zweiten Kanal (211b) empfängt, wobei die Daten Betriebsparameter des zweiten Kanals (211b) betreffen;
• die ersten Daten über die empfangenen Betriebsparameter an den Rechner (11) überträgt;
• einen Befehl, der an den Motor (b1) des zweiten Kanals (211b) zu senden ist, über den Rechner (11) empfängt;
• den Befehl an den Motor (b1) des zweiten Kanals (211b) sendet;
∘ die dritte Steuervorrichtung (223) in einem betriebsbereiten Zustand ist und so gestaltet ist, dass sie:
• Daten über den dritten Kanal (212c) empfängt, wobei die zweiten Daten die Betriebsparameter des dritten Kanals (212c) betreffen;
• die Daten über die empfangenen Betriebsparameter an den Rechner (11) überträgt;
• gleichzeitig mit dem Empfang des Befehls durch die zweite Steuervorrichtung (222) vom Rechner (11) einen Befehl zum Senden an den Motor (c1) des dritten Kanals (212c) empfängt;
• den Befehl an den Motor (c1) des dritten Kanals (212c) sendet;
- einem sogenannten Ausfallmodus der dritten Steuervorrichtung, bei dem:
∘ die erste Steuervorrichtung (221) in einem betriebsbereiten Zustand ist und so gestaltet ist, dass sie:
• Daten über den ersten Kanal (211a) empfängt, wobei die Daten Betriebsparameter des ersten Kanals (211a) betreffen;
• die Daten über die empfangenen Betriebsparameter an den Rechner (11) überträgt;
• mindestens einen Befehl vom Rechner (11), der an den Motor (a1) des ersten Kanals (211a) zu senden ist, empfängt;
• den Befehl an den Motor (a1) des ersten Kanals (211a) sendet;
∘ die zweite Steuervorrichtung (222) sich in einem Standby-Zustand befindet und so gestaltet ist, dass sie:
• mindestens einen Datensatz über den zweiten Kanal (211b) empfängt, wobei der Datensatz die Betriebsparameter des zweiten Kanals (211b) betrifft;
• den Datensatz über die empfangenen Betriebsparameter an den Rechner (11) überträgt;
∘ die dritte Steuervorrichtung (223) sich in einem nicht funktionsfähigen Zustand befindet;
für jeden Betriebsmodus die Summe aller Befehle, die jeweils vom Motor (a1) des ersten Kanals (211a) oder vom Motor (b1) des zweiten Kanals (211b) und/oder vom Motor (c1) des dritten Kanals (212c) empfangen werden, die mechanische Steuerung des hydraulischen Servostellantriebs (30) gewährleistet.

3. Steuerungsübertragungssystem (20) nach dem vorhergehenden Anspruch, bei dem
- der erste Kanal (211a) einen Antriebspositionssensor (a2) und einen Drehpositionssensor (d1) umfasst;
- der zweite Kanal (211b) einen Antriebspositionssensor (b2) und einen Drehpositionssensor (d2) umfasst;
- der dritte Kanal (212c) einen dritten Antriebspositionssensor (c2) und einen linearen Positionssensor (212c) umfasst;
wobei ein von einem der ersten, zweiten und dritten Kanäle empfangener Datensatz, der die Betriebsparameter dieses Kanals betrifft, Folgendes umfasst:
- Daten über die Position des in dem Kanal enthaltenen Motors und/oder
- Daten bezüglich der Position des Stellantriebs, in dem der Kanal enthalten ist.

4. Steuerungsübertragungssystem (20) gemäß einem der Ansprüche 2 bis 3, bei dem ein vom Rechner (11) an eine Steuervorrichtung gesendeter Befehl einen Positionssollwert für den Motor umfasst, der in dem mit der Steuervorrichtung verbundenen Kanal enthalten ist.

5. Steuerungsübertragungssystem (20) nach einem der vorstehenden Ansprüche, bei dem der Drehantrieb (211) irreversibel ist.

6. Steuerungsübertragungssystem (20) nach einem der vorstehenden Ansprüche, bei dem der Linearantrieb (212) irreversibel ist.

7. Steuerungsübertragungssystem (20) nach einem der vorstehenden Ansprüche, bei dem die erste mechanische Verbindung (213) und die zweite mechanische Verbindung (214) in Reihe geschaltet sind.

8. Steuerungsübertragungssystem (20) nach einem der vorstehenden Ansprüche, das vier mechanische Systeme (21) umfasst.

9. Steuereinheit (1) für mindestens einen hydraulischen Servostellantrieb (30), **dadurch gekennzeichnet, dass** sie umfasst:
- ein Steuermodul (10);
- ein Steuerungsübertragungssystem (20) gemäß den Ansprüchen 1 bis 8;
- mindestens einen hydraulischen Servostellantrieb (30).

10. Flugzeug (A) mit einer Steuereinheit (1) gemäß dem vorhergehenden Anspruch.

## Claims

1. A system (20) for transmitting command to at least one hydraulic servo actuator (30) including:
- At least one mechanical system (21) comprising:
∘ a rotary electric actuator (211) including a first pathway (211a) comprising a motor (a1), and a second pathway (211b) including a motor (b1);
∘ a linear electric actuator (212) including a third pathway (212c) including a motor (c1), the linear electric actuator (212) being connected to the rotary electric actuator (211) by a first mechanical connection (213) and being configured to be connected to the hydraulic servo actuator (30) by a second mechanical connection (214);
- A command system (22) comprising:
∘ a first command device (221) connected through an electrical connection to the first pathway (211a) of the rotary electric actuator (211) of said mechanical system (21),
∘ a second command device (222) connected through an electrical connection to the second pathway (211b) of the rotary electric actuator (211) of said mechanical system (21),
∘ a third command device (223) connected through an electrical connection to the third pathway (212c) of the linear electric actuator (212).

2. The command transmission system (20) according to the preceding claim, wherein the command system (22) is configured to operate in at least one mode of the following operating modes:
- So-called nominal operating mode in which:
∘ the first command device (221) is in an operational validity state, and is configured to:
• receive a piece of data from the first pathway (211a), the piece of data relating to operating parameters of said first pathway (211a);
• transmit the piece of data relating to the operating parameters received to a calculator (11);
• receive a command emitted from the calculator (11) to the motor (a1) of the first pathway (211a);
• emit the command to the motor (a1) of the first pathway (211a);
∘ the second device (222) is in a standby validity state and is configured to:
• receive a piece of data from the second pathway (211b), the piece of data relating to operating parameters of said second pathway (211b);
• emit the piece of data relating to the operating parameters received to the calculator (11);
∘ the third command device (223) is in an operational validity state and is configured to:
• receive a piece of data from the third pathway (212c), the piece of data relating to operating parameters of said third pathway (212c);
• emit the piece of data relating to the operating parameters received to the calculator (11);
• receive a command emitted from the calculator (11) to the motor (c1) of the third pathway (212c), simultaneously with the reception of the command by the first command device (221),
• emit the command to the motor (c1) of the third pathway (212c);
- So-called failure mode of the first command device in which:
∘ the first command device (221) is in a non-operational validity state,
∘ the second command device (222) is configured to shift from a standby validity state to an operational validity state, the change of state of the second command device (222) resulting from the non-operational validity state of the first command device (221), and is configured to:
• receive a piece of data from the second pathway (211b), the piece of data relating to operating parameters of said second pathway (211b);
• transmit the first piece of data item relating to the operating parameters received to the calculator (11);
• receive from the calculator (11) a command to be emitted to the motor (b1) of the second pathway (211b);
• emit the command to the motor (b1) of the second pathway (211b);
∘ the third command device (223) is in an operational validity state and is configured to:
• receive a piece of data from the third pathway (212c), the second piece of data relating to operating parameters of said third pathway (212c);
• transmit the piece of data relating to the operating parameters received to the calculator (11);
• receive from the calculator (11), simultaneously with the reception of the command by the second command device (222), a command to be emitted to the motor (c1) of the third pathway (212c);
• emit the command to the motor (c1) of the third pathway (212c);
- So-called failure mode of the third command device in which:
∘ the first command device (221) is in an operational validity state, and is configured to:
• receive a piece of data from the first pathway (211a), the piece of data relating to operating parameters of said first pathway (211a);
• transmit the piece of data relating to the operating parameters received to the calculator (11);
• receive from the calculator (11) at least one command to be emitted to the motor (a1) of the first pathway (211a);
• emit the command to the motor (a1) of the first pathway (211a);
∘ the second command device (222) is in a standby validity state and is configured to:
• receive at least one piece of data from the second pathway (211b), the piece of data relating to operating parameters of said second pathway (211b);
• transmit the piece of data relating to the operating parameters received to the calculator (11);
∘ the third command device (223) is in a non-operational state;
for each operating mode, the sum of each command received respectively by the motor (a1) of the first pathway (211a) or the motor (b1) of the second pathway (211b) and/or the motor (c1) of the third pathway (212c) ensures mechanical command of the hydraulic servo actuator (30).

3. The command transmission system (20) according to the preceding claim, wherein:
- the first pathway (211a) comprises a motor position sensor (a2) and a rotary position sensor (d1);
- the second pathway (211b) comprises a motor position sensor (b2) and a rotary position sensor (d2);
- the third pathway (212c) comprises a third motor position sensor (c2) and a linear position sensor (212c);
and wherein a piece of data received by a pathway of the first, second and third pathways relating to the operating parameters of that pathway comprises:
- a piece of data relating to the position of the motor included in the pathway and/or
- a piece of data relating to the position of the actuator in which said pathway is included.

4. The command transmission system (20) according to any of claims 2 to 3 wherein a command emitted from the calculator (11) to a command device comprises a position set point intended for the motor included in the pathway connected to said command device.

5. The command transmission system (20) according to any of the preceding claims, wherein the rotary actuator (211) is irreversible.

6. The command transmission system (20) according to any of the preceding claims, wherein the linear actuator (212) is irreversible.

7. The command transmission system (20) according to any of the preceding claims, wherein the first mechanical connection (213) and the second mechanical connection (214) are in series.

8. The command transmission system (20) according to any of the preceding claims, comprising four mechanical systems (21).

9. An assembly (1) for commanding at least one hydraulic servo actuator (30), **characterised in that** it comprises:
- a control module (10);
- a command transmission system (20) according to claims 1 to 8;
- at least one hydraulic servo actuator (30).

10. An aircraft (A) comprising a command assembly (1) according to the preceding claim.
